# EUROPEAN PATENT SPECIFICATION

(11) **EP 2 836 537 B1**
(45) Date of publication and mention of the grant of the patent: **28.12.2016**
(21) Application number: 13776329.8
(22) Date of filing: 11.04.2013
(51) Int. Cl.: C08G 77/445, C09D 183/10, C08G 63/695

(54) **SILICONE-POLYESTER COMPOSITION**
SILIKONPOLYESTERZUSAMMENSETZUNG
COMPOSITION DE SILICONE-POLYESTER

(30) Priority: 12.04.2012 WO PCT/CN2012/073951
(43) Date of publication of application: 18.02.2015
(73) Proprietor: Dow Corning Corporation, Midland, MI 48686-0994 (US); Dow Corning Taiwan Inc, Taipei, Taiwan 11493 (TW); Dow Corning (China) Holding Co., Ltd, Shanghai 200000 (CN)
(72) Inventor: BEKEMEIER, Thomas, Birch Run, Michigan 48415 (US); CHOU, Lucas, New Taipei City 22043 (TW); LIU, Zhihua, Shanghai 200333 (CN); WAKITA, Mari, Chuoh-ku Chiba-city Chiba (JP); WIEBER, Gary, Midland, Michigan 48642 (US); WITUCKI, Gerald, Midland, Michigan 48642-3135 (US); XIANG, Xiaojun, Shanghai 200000 (CN); ZHANG, Fang, Midland, MI 48640 (US); ZHU, Jiayin, Shanghai (CN)
(74) Representative: Earnshaw, Geoffrey Mark
(86) International application number: PCT/CN2013/074105
(87) International publication number: WO 2013/152732

(56) References cited:
- EP-A2- 0 759 457
- CN-A- 102 382 309
- US-A1- 2005 136 267
- US-A1- 2005 136 267
- US-A1- 2012 010 302

## Description

This invention relates to silicone-polyester compositions. To improve heat and weathering resistance, polyesters are often modified with silicone technology for example at levels ranging from thirty to fifty percent of polyester weight. The silicone and polyester compositions when reacted together are believed to form silicone-polyester copolymers. Silicone-polyester resins typically employs the SiOH or SiOR1 (R1 being a hydrocarbyl moiety) functional groups of silicone reacting with the COH functional group of polyester. Both prepolymers are generally formed having three-dimensional units, typically formed via condensation reactions

The terms "silicone-polyester composition" used herein are designed to mean either unreacted silicone-polyester mixture or reacted silicone-polyester resins i.e. silicone-polyester hybrid copolymers.

Silicone-polyester compositions are frequently used for cookware coatings or for electrical domestic appliance such as coatings for steam irons. These resins systems are able to form release or non-stick coatings to which extraneous materials will not adhere and residues for example food residues or spray starch can be removed easily as the cookware or appliance is cleaned. Cookware coatings include the external and interior surfaces of the utensils, such as saute or frying pans, toasters, deep-fat fryers and baking trays. These coatings require, along with thermal stability, resistance to scratches and marring, particularly when heated. Most organic coatings will exhibit some degree of thermo-plasticity that, under normal kitchen conditions, can result in damaged coatings. The polyester component imparts low thermoplasticity, high flexibility and good pigmentability while the silicone part brings heat resistance, weathering resistance and low surface tension.

Polyester siloxane backing enamel lacquers are disclosed in GB 1070174. The enamels are produced by heating polyester with an organopolysiloxane obtained by hydrolysis of phenyltrichlorosilane, dimethyldichlorosilane and trimethylchlorosilane.

US4465712 describes siloxane-polyester compositions comprising (A) a siloxane-polyester copolymer, (B) a solvent for the siloxane-polyester copolymer, (C) a silane wherein one of the groups attached to silicon contains at least one amino group and (D) a silane having 3 or 4 alkoxy or alkoxyalkoxy groups attached to silicon any remaining group being hydrocarbon or hydrocarbon ether groups.

US6893724 describes silicone-polyester-polysilicate hybrid compositions for thermal resistance coating. Alkyl polysilicate is reacted with silicone-polyester resin, thereby creating a composition forming a hybrid structure having good thermal resistance, especially hot-oil resistance and hot hardness, and good adhesion to metals such as carbon steel, stainless steel and aluminum. However adding the alkyl polysilicate part requires an additional step for making the final coating.

US2005/0136267 discloses solid siliconized polyester resins for powder coatings. The organopolysiloxane resin preferably comprises 0-15 mole percent Q units, 30-100 mole percent T units, 0-20 mole percent M units, and 0-20 mole percent D units, based on the total number of moles of the organopolysiloxane resin. More preferably, the organopolysiloxane resin comprises 0-5 mole percent Q units, 75-100 mole percent T units, 0-10 mole percent M units, and 0-10 mole percent D units, based on the total number of moles organopolysiloxane resin, Even more preferably, the organopolysiloxane resin comprises 95 mole percent T units and 5 mole percent D units, based on the total number of moles of the organopolysiloxane resin. Most preferably, the organopolysiloxane resin comprises 57 mole percent T-phenyl units, 39 mole percent T-methyl units and 4 mole percent D-methyl units.

Silsesquioxane containing T (RSiO3/2) units silicone resins are known as the standard of the industry for providing an acceptable balance of thermal (film integrity and color stability), and physical properties.

While widely utilized, the need exists to reduce the thermo-plasticity and improve the hot hardness of silicone-polyester formulated coatings. Reduced thermoplasticity can be achieved via incorporation of Q (SiO4/2) moieties, but dramatic viscosity increases and the risk of gellation are problematic. Better hot hardness, good heat resistance together with acid resistance are required for the non-stick coating of cookware, therefore better performance is looked for the silicone-polyester hybrid resins.

A new material was synthesized by incorporating Q (SiO4/2) units along with Phenyl T (PhSiO3/2) (hereafter referred to as "T^{Ph} units") into a silicone intermediate that was subsequently reacted with a hydroxyl functional polyester without gellation or prohibitive viscosity build. The resulting copolymer exhibited the needed boost in hot hardness.

Therefore, the invention provides a silicone-polyester composition characterised in that the silicone part contains T^{Ph} and Q units and is free of D units.

The invention further provides a process of forming a silicone-polyester composition characterised in that a polyester precursor or polyester resin and a silicone precursor or silicone resin are mixed and reacted together so as to form a silicone-polyester composition wherein the silicone part contains T^{Ph} and Q units and optionally (MeSiO3/2) units (hereafter referred to as " T^{Me} units").

It is believed that the T^{Ph} units of the silicone part provide good compatibility of the silicone resin intermediate to the polyester resin intermediate. It is believed that the presence of Q units in the silicone part enhances the hot hardness and heat resistance (lower yellowing) of the final silicone-polyester resin. The inclusion of D units like D-methyl units (Me2SiO2/2) is believed to reduce the Tg of the polymer, resulting in a softer coating and reduced mar resistance hence it is preferred that D units are absent in the silicone part.

In one preferred embodiment, the silicone part is composed of T^{Ph} and Q units. The silicone part of the silicone-polyester composition is thus formed of only T^{Ph} and Q units. Of course the silicone part can contain end units in addition to the T^{Ph} and Q units. These end units are preferably SiOR moieties where R is preferably H or an alkyl more preferably methyl, ethyl, propyl. These can further react with COH moieties of the polyester resin.

We have found that such composition form coatings with hot hardness and heat resistance exceeding that of prior art.

In other preferred embodiments, the silicone part of the silicone-polyester composition further contains T^{Me} units. It is believed the adding of T^{Me} units balances the hot hardness, heat resistance and further improves film formation and subsequent acid resistance of the final silicone-polyester resin. Furthermore, it has a positive impact on material cost.

Preferably, the silicone component of the silicone-polyester composition of the invention is characterised in that it is composed of T^{Ph}, T^{Me} units and Q units. We have found that such composition permits to form coatings with excellent resistance to acids and hot hardness. Of course the silicone part can contain end units in addition to the T^{Ph}, T^{Me} units and Q units. These end units are preferably SiOR moieties where R is preferably H or an alkyl more preferably methyl, ethyl, propyl. Such end units can react with COH moieties of the polyester resin.

Preferably T^{Ph} units, T^{Me} units and Q units are present in molar ratios of 10-80%, 0-70% and 1-60% respectively, calculated on the molar sum of the T^{Ph}, T^{Me} and Q units. Preferably, if there are no T^{Me} units, the T^{Ph} and Q units are present in molar ratios of 60-80%:40-20% for example 70%:30%. When there are T^{Ph} units, T^{Me} units and Q units, they are preferably present in amount of 30-50%, 30-50%, 10-30% calculated on the molar sum of the T^{Ph} , T^{Me} and Q units. In one preferred embodiment, the ratio is 40%:40%:20%. In another preferred embodiment it is 60%:30%:10%.

Preferably, the remaining alkoxy function is from 40-200 mol% (calculation based on Si as 100%). The alkoxy refers to C1-C6 alkoxy function, preferably C1-C3 (methoxy, ethoxy and propoxy).

The invention extends to a process of forming a silicone-polyester composition characterised in that a polyester precursor and a silicone precursor are mixed and reacted together so as to form a silicone-polyester composition wherein the silicone part contains T^{Ph} and Q units and optionally T^{Me} units and is free of D units.

In one preferred embodiment, silicone precursor and polyester precursor are first reacted separately to form silicone resin and polyester resin respectively and these resins are subsequently reacted together.

The reaction temperature at which the polyester precursor or resin and the silicone precursor or resin are mixed together is preferably in the range of 80 to 150 C, optionally it may be around 100-125 C, more preferably 110-120 C.

Preferably, the polyester precursor is formed of isophtalic acid, neopentylglycol and trimethylolpropane or trimethylolethane.

Preferably, the silicone precursor is formed of a mixture of phenyltrimethoxysilane or phenyltriethoxysilane, tetraethylorthosilicate and optionally methyltrimethoxysilane or methyltriethoxysilane. Phenyltrimethoxysilane or phenyltriethoxysilane forms T^{Ph} units in the silicone polymer. Tetraethylorthosilicate forms Q units in the silicone polymer. The optional methyltrimethoxysilane or methyltriethoxysilane forms T^{Me} units in the silicone polymer.

Ingredients other than silicone and polyester components can be added to the composition. For example, the composition may contain organic and/or inorganic pigment like titanium oxide or barium sulfate, binder that adheres to the surface to be treated, a carrier either an organic solvent or water that carries the ingredients but evaporates when the coating is cured, or a reinforcing agent to provide wear protection. It can also contain filler like carbon black or silica, glimmer, matting agent, release additives and curing catalysts.

The invention extends to a coating on a substrate characterised in that the coating comprises a silicone-polyester composition as defined above. The coating may be fairly thin for example 20-25 micrometer and more generally from 5 to 500 micrometer, preferably from 15 to 100 micrometer. The coating may be applied in several ways to the substrate for example by spraying, curtain coating or roller coating the composition containing all ingredients.

The coating may be applied in several successive layers which may have different compositions. However preferably it is applied as a single coating layer which simplifies the process.

The invention extends to a substrate bearing a coating characterised in that the coating comprises a silicone-polyester composition as defined above.

The substrate is preferably made of aluminium, stainless steel, iron, plastics or glass.

The invention extends to the use of a silicone-polyester composition as defined above to form a coating on a substrate.

### EXAMPLES

### A. Polyester resin synthesis

Trimethylolpropane (TMP, 164g), Neopentyl glycol (NPG, 38g) and m-Phthalic acid (IPA, 202g) were added to 3 necked, round bottom flask fitted with a water cooled condenser, a PTFE stirrer and a thermocouple. The nitrogen sweep, condenser and heating mantle were turned on. The materials were heated to 150 °C prior to turn on the stirrer motor. Then the whole was heated to 180 °C and hold until bulk of reaction water was removed. Periodically drain was trapped, and heated to 220 °C until water evolution stops. The temperature was kept and some samples were taken from the mixture for testing acid value. When the acid value was less than 10mg KOH/g, heating was turned off and cooled to 140 °C, added propylene glycol monomethyl ether acetate (PMA, 439g) as solvent for diluting.

### B. Silicone resin synthesis

**I** [0032] A 500g, three necked, round bottom flask fitted with a water cooled condenser, a PTFE stirrer and a thermocouple was charged with phenyltrimethoxysilane (238.0g), methyltrimethoxysilane (81.7 g) and tetraethylorthosilicate (41.7g) in molar ratio of 6/3/1. A pressure-equalizing addition funnel was charged with deionized water (40.83g) which solved concentrated hydrochloric acid (0.2ml). The nitrogen sweep was turned on. Water was added dropwise about 30 minutes with stirring. The mixture was heated slowly to 60°C and hold for 1 hour. Then the mixture was heated to 140°C stepwise to remove volatiles and hold for 1 hour as well as vacuum puling for additional 1 hour. Finally, it was cooled down below 80°C, filtered and drummed off. The resulting resin was clear liquid and its viscosity was about 206.9 cp at 24 ± 1°C.
**II** [0033] A 500g, three necked, round bottom flask fitted with a water cooled condenser, a PTFE stirrer and a thermocouple was charged with phenyltrimethoxysilane (277.60g), tetraethylorthosilicate (125.00g) in molar ratio of 7/3. The nitrogen sweep was turned on. A pressure-equalizing addition funnel was charged with deionized water (41.73g) which solved concentrated hydrochloric acid (0.2ml). The mixture of silanes was heated to 40°C with stirring. Then water was added dropwise over 30 minutes. The mixture was heated slowly to 170°C and hold for 3 hours to remove volatiles. Finally, it was cooled down below 60°C, filtered and drummed off. The resulting resin was clear liquid and its viscosity was about 463.5 cp at 24 ± 1°C.
**III** [0034] A 500g, three necked, round bottom flask fitted with a water cooled condenser, a PTFE stirrer and a thermocouple was charged with phenyltrimethoxysilane (237.6g), methyltriethoxysilane (106.8 g) and tetraethylorthosilicate (41.6g) in molar ratio of 6/3/1. A pressure-equalizing addition funnel was charged with deionized water (39.93g) which solved concentrated hydrochloric acid (0.2ml). Turn on the nitrogen sweep. Water was added dropwise about 30 minutes with stirring. The mixture was heated slowly to 60°C and hold for 1 hour. Then heat the mixture stepwise to 140°C to remove volatiles and hold for 1 hour as well as vacuum puling for additional 1 hour. Finally, cool down below 80°C, filtered and drum off. The resulting resin was clear liquid and its viscosity was about 107.7 cp at 24 ± 1°C.

### C. Silicone-Polyester resin synthesis

### Example 1

- Polyester (116.3g) resin was charged into a 500g, 3 necked round bottom flask fitted with a water cooled condenser, a PTFE stirrer and a thermocouple.
- Silicone resin was add (I, 39.25g), propylene glycol monomethyl ether acetate (PMA, 62.41 g) as solvent and Tetra-n-butyl Titanate (0.015g) as catalyst into flask under nitrogen surrounding.
- The mixture was heated slowly up to 120°C with stirring, trap off produced methanol and ethanol. After 1 h, a transparent silicone-polyester resin was prepared.
- Samples were picked up and dropped on glass panel regularly to check the appearance at room temperature until clear.
- Heating was stopped, cooled down below 60°C, filter and drum off. Viscosity of prepared resin was about 1442cp at 24 ± 1°C.

### Example 2

- Polyester (116.3g) resin was charged into a 500g, 3 necked round bottom flask fitted with a water cooled condenser, a PTFE stirrer and a thermocouple.
- Silicone resin (II, 39.25g), propylene glycol monomethyl ether acetate (PMA, 93.7g) as solvent and Tetra-n-butyl Titanate (0.015g) as catalyst were added into flask under nitrogen surrounding.
- The mixture was heated slowly up to 110°C with stirring, trap off produced methanol and ethanol. After 160 min, a transparent silicone-polyester resin was prepared.
- Samples were picked up and dropped on glass panel regularly to check the appearance at room temperature until clear.
- Heating was stopped, cooled down below 60°C, filter and drum off. Viscosity of prepared resin was about 284.8cp at 24 ± 1°C.

### Example 3

- Polyester (116.3g) resin was charged into a 500g, 3 necked round bottom flask fitted with a water cooled condenser, a PTFE stirrer and a thermocouple.
- Silicone resin (III, 39.25g), propylene glycol monomethyl ether acetate (PMA, 62.41g) as solvent and Tetra-n-butyl Titanate (0.015g) as catalyst were added into flask under nitrogen surrounding.
- The mixture was heated slowly up to 120°C with stirring, trap off produced methanol and ethanol. After 1 h, a transparent silicone-polyester resin was prepared.
- Samples were picked up and dropped on glass panel regularly to check the appearance at room temperature until clear.
- Heating was stopped, cooled down below 60°C, filter and drummed off. Viscosity of prepared resin was about 1045cp at 24 ± 1°C.

### Comparative example

A 100% T phenyl silicone resin available commercially was reacted with polyester resin in the same way as described for examples 1 to 3.

### D. Performance

The final resin was applied onto cleaned steel and aluminum panel (60µm wet film) for Hot Hardness, adhesion and boiled water solution of acetic acid (3%) resistance test. The coat was allowed to air drying for 15min, and baked in oven at 280 °C for 10 min.

### Hot Hardness Test Method (ASTM D3363)

Coated steel panels are placed on a cool hot plate. A surface thermometer is placed on the coated surface and the hot plate is turned on. As the panel temperature rises. The coatings are rated by attempting to scratch the surface with drafting pencils of increasing lead hardness. Coating hardness is rated as the highest pencil hardness that cannot scratch through the coating (higher numbers in front of the H indicate higher hardnesses).

### Adhesion Test Method

Cross cut the coat to form 100 grids. Apply and remove pressure-sensitive tape over the grids. Count the number of retaining grids.

### Acetic Acid Solution Resistance

Soak the coated aluminum panel into boiling water solution with 3% acetic acid. After 2h, take the panels out and wash by water. Observe the surface condition of the coat.

**Table 1**

| Silicone-Polyester Resin | Hot Hardness | Adhesion | Acetic Acid Solution Resistance |
|---|---|---|---|
| Example 1 | 3H/240°C; 3H/260°C; 2H/280°C, 1H/300°C. | 100/100 | No bubble and crack |
| Example 2 | 3H/240°C; 3H/260°C; 3H/280°C, 2H/300°C. | 100/100 | No bubble and crack |
| Example 3 | 3H/240°C; 3H/260°C; 2H/280°C, 1H/300°C. | 100/100 | No bubble and crack |
| Comparative | 2H/240°C; 2H/260°C; 1H/280°C, 1H/300°C. | 100/100 | No bubble and crack |

Example 3 further showed improved resistance of the coat after acid resistance test and better scratch resistance when compared to examples 1 and 2.

### TQ synthesis IV- Example 4

Loaded trimethoxyphenylsilane (277.2g), methyltriethoxysilane (71.2g) and ethylsilicate (41.6g) into 4 neck flask (500ml) fitted with a water cooled condenser, PTFE stirrer, nitrogen inlet and thermometer, purged Nitrogen for 15 minutes, then stirred the mixture with 300 rpm under Nitrogen surrounding. Then the flask was fitted a pressure-equalizing addition funnel containing deionized water (41.73g) and HCl (0.5ml, 37%). Dropped the water dropwise for 15min at room temperature, then heated the contents to 65°C step by step. After hydrolyzed for 1.5h and a Dean-Stark apparatus was charged, the contents were heated to 140°C and held at that temperature for 1 h to strip the by-product methanol and ethanol, then cooled to 60°C and loaded 40g Methanol. The content was heated to 140°C again to strip methanol, then held at that temperature for 1 h and vacuumed for additional 1 h. Finally, cooled down below 80°C, filtered and drum off. The resulting resin was clear liquid and its viscosity was about 1065 cp at 24 ± 1°C.

### Silicone-polyester synthesis (example 4)

TQ resin (resin IV, 23.55g) Polyester resin (69.78g), PMA (37.45g) and TnBT (tetranbutyltitanate 10% in Xylene, 0.09g) were loaded into 4 neck vessel (250ml) fitted with a water cooled condenser, PTFE stirrer, nitrogen inlet and heat controller, purged Nitrogen for 10 minutes, then stirred the mixture with 300 rpm under Nitrogen surrounding. Then the mixture was heated to 120°C step by step, and held at that temperature for 6.5 hours. Stop heating, cooled down below 60°C, filter and drummed off. Viscosity of prepared resin was 1009cp at 24 ± 1°C.

### Performance of Silicone-polyester synthesis (example 4)

| Silicone-Polyester Resin | Hot Hardness | Adhesion | Acetic Acid Solution Resistance |
|---|---|---|---|
| Example 4 | 3H/240°C; 3H/260°C; 2H/280°C, 1H/300°C. | 100/100 | No bubble and crack |

### TQ synthesis (silicone resin V)

Loaded phenyltriethoxysilane (2016g), methyltriethoxysilane (427.2g) and ethylsilicate (249.6g) into 4 neck vessel (3 L) fitted with a water cooled condenser, PTFE stirrer, nitrogen inlet and thermometer, purged Nitrogen for 15 minutes, then stirred the mixture with 270 rpm under Nitrogen surrounding. Then the flask was fitted a pressure-equalizing addition funnel containing deionized water (250.2g) and HCl (3.0 ml, 37%). Dropped the water dropwise for 15min at room temperature, then heated the contents to 75°C step by step. After hydrolyzed for 2h and a Dean-Stark apparatus was charged, the contents were heated slowly to 145°C to strip by-product ethanol, then held at that temperature for 9h and vacuumed for additional 1 h. Finally, cooled down below 80°C, filtered and drum off. The resulting resin was clear liquid and its viscosity was about 549.2 cp at 24 ± 1°C.

### Silicone-polyester synthesis (example 5)

TQ resin (resin V, 23.55g) Polyester resin (69.78g), PMA (37.45g) and TnBT (10% in Xylene, 0.09g) were loaded into 4 neck vessel (250ml) fitted with a water cooled condenser, PTFE stirrer, nitrogen inlet and heat controller, purged Nitrogen for 10 minutes, then stirred the mixture with 300 rpm under Nitrogen surrounding. Then the mixture was heated to 120°C step by step, and held at that temperature for 13 hours. Stop heating, cool down below 60°C, filter and drum off. Viscosity of prepared resin was 848cp at 24 ± 1°C.

### Performance of Silicone-polyester synthesis (resin V)

| Silicone-Polyester Resin | Hot Hardness | Adhesion | Acetic Acid Solution Resistance |
|---|---|---|---|
| Example 5 | 3H/240°C; 2H/260°C; 2H/280°C, 1H/300°C. | 100/100 | No bubble and crack |

## Claims

1. A silicone-polyester composition **characterised in that** the silicone part contains T^{Ph} and Q units and is free of D units.

2. The silicone-polyester composition of claim 1 **characterised in that** the silicone part is composed of T^{Ph} and Q units.

3. The silicone-polyester composition of claim 1 **characterised in that** the silicone part further contains T^{Me} units.

4. The silicone-polyester composition of claim 3 **characterised in that** the silicone part is composed of T^{Ph}, T^{Me} units and Q units.

5. The silicone-polyester composition of any preceding claim **characterised in that** T^{Ph}, T^{Me} units and Q units are present in molar ratios of 10-80%, 0-70% and 1-60% respectively, preferably 30-50%, 30-50%, 10-30% calculated on the molar sum of the T^{Ph}, T^{Me} and Q units.

6. The silicone-polyester composition of any preceding claim **characterised in that** in the silicone part, the remaining alkoxy function is from 40-200 mol% (calculation based on Si as 100%).

7. The silicone-polyester composition of any preceding claim **characterised in that** the polyester and silicone are present in a ratio of 90%:10% to 10%:90% preferably 75%:25% to 40%:60% weight percent.

8. The silicone-polyester composition of any preceding claim **characterised in that** the composition has a hot hardness of at least 2H at 220°C as measured by Hot Hardness Test Method in accordance with ASTM D3363.

9. A process of forming a silicone-polyester composition **characterised in that** a polyester resin or polyester precursor and a silicone resin or silicone precursor are mixed and reacted together so as to form a silicone-polyester composition wherein the silicone part contains T^{Ph} and Q units and optionally T^{Me} units and is free of D units.

10. The process according to claim 9 **characterised in that** the polyester precursor is formed of isophtalic acid, neopentylglycol and trimethylolpropane.

11. The process according to claim 9 or 10 **characterised in that** the silicone precursor is formed of a mixture of phenyltrimethoxysilane or phenyltriethoxysilane, tetraethylorthosilicate and optionally methyltrimethoxysilane or methyltriethoxysilane.

12. The process according to any of claims 9 to 11, wherein silicone precursor and polyester precursor are first reacted separately to form silicone resin and polyester resin that are reacted together.

13. Coating on a substrate **characterised in that** the coating comprises a silicone-polyester composition according to any of claim 1 to 8.

14. Substrate bearing a coating **characterised in that** the coating comprises a silicone-polyester composition according to any of claim 1 to 8.

15. Substrate according to claim 14 **characterised in that** the substrate is made of aluminium, stainless steel, iron, plastics or glass.

16. Use of a silicone-polyester composition according to any of claim 1 to 8 to form a coating on a substrate.

## Patentansprüche

1. Silikonpolyesterzusammensetzung **dadurch gekennzeichnet, dass** der Silikonteil T^{Ph}- und Q-Einheiten enthält und von D-Einheiten frei ist.

2. Silikonpolyesterzusammensetzung nach Anspruch 1 **dadurch gekennzeichnet, dass** der Silikonteil aus T^{Ph}- und Q-Einheiten besteht.

3. Silikonpolyesterzusammensetzung nach Anspruch 1 **dadurch gekennzeichnet, dass** der Silikonteil weiterhin T^{Me}-Einheiten enthält.

4. Silikonpolyesterzusammensetzung nach Anspruch 3, **dadurch gekennzeichnet, dass** der Silikonteil aus T^{Ph}-, T^{Me}-Einheiten und Q-Einheiten besteht.

5. Silikonpolyesterzusammensetzung nach einem vorstehenden Anspruch, **dadurch gekennzeichnet, dass die** T^{Ph}, T^{Me}-Einheiten und Q-Einheiten in Molanteilen von 10-80 %, 0-70 % bzw. 1-60 %, vorzugsweise 30-50 %, 30-50 %, 10-30 %, berechnet bezüglich der Molmassensumme der T^{Ph}-, T^{Me}- und Q-Einheiten, vorhanden sind.

6. Silikonpolyesterzusammensetzung nach einem vorstehenden Anspruch, **dadurch gekennzeichnet, dass** in dem Silikonteil die Alkoxy-Restfunktion 40-200 Mol-% (Berechnung bezogen auf Si als 100 %) beträgt.

7. Silikonpolyesterzusammensetzung nach einem vorstehenden Anspruch, **dadurch gekennzeichnet, dass** Polyester und Silikon in einem Verhältnis von 90:10 Gew.-% bis 10:90 Gew.-%, vorzugsweise 75:25 Gew.-% bis 40:60 Gew.-% vorhanden sind.

8. Silikonpolyesterzusammensetzung nach einem vorstehenden Anspruch, **dadurch gekennzeichnet, dass** die Zusammensetzung eine Heißhärte von mindestens 2H bei 220 °C aufweist, wie durch die Heißhärtetestmethode gemäß ASTM D3363 gemessen.

9. Verfahren zum Bilden einer Silikonpolyesterzusammensetzung, **dadurch gekennzeichnet, dass** ein Polyesterharz oder Polyester-Vorläufer und ein Silikonharz oder Vorläufer miteinander vermischt und umgesetzt werden, so dass sie eine Silikonpolyesterzusammensetzung bilden, wobei der Silikonteil T^{Ph}- und Q-Einheiten und gegebenenfalls T^{Me}-Einheiten enthält und von D-Einheiten frei ist.

10. Verfahren nach Anspruch 9 **dadurch gekennzeichnet, dass** der Polyester-Vorläufer aus Isophthalsäure, Neopentylglycol und Trimethylolpropan gebildet wird.

11. Verfahren nach Anspruch 9 oder 10 **dadurch gekennzeichnet, dass** der Silikon-Vorläufer aus einem Gemisch von Phenyltrimethoxysilan oder Phenyltriethoxysilan, Tetraethylorthosilicat und gegebenenfalls Methyltrimethoxysilan oder Methyltriethoxysilan gebildet wird.

12. Verfahren nach einem der Ansprüche 9 bis 11, wobei der Silikon- und Polyester-Vorläufer zuerst getrennt unter Bildung von Silikon- und Polyesterharz umgesetzt werden, die dann miteinander umgesetzt werden.

13. Beschichtung auf einem Substrat **dadurch gekennzeichnet, dass** die Beschichtung eine Silikonpolyesterzusammensetzung nach einem von Anspruch 1 bis 8 umfasst.

14. Substrat, das eine Beschichtung trägt, **dadurch gekennzeichnet, dass** die Beschichtung eine Silikonpolyesterzusammensetzung nach einem von Anspruch 1 bis 8 umfasst.

15. Substrat nach Anspruch 14 **dadurch gekennzeichnet, dass** das Substrat aus Aluminium, Edelstahl, Eisen, Kunststoff oder Glas hergestellt ist.

16. Verwendung einer Silikonpolyesterzusammensetzung nach einem von Anspruch 1 bis 8 zur Bildung einer Beschichtung auf einem Substrat.

## Revendications

1. Composition de silicone-polyester **caractérisée en ce que** la partie silicone contient des motifs T^{Ph} et Q et est exempte de motifs D.

2. Composition de silicone-polyester selon la revendication 1, **caractérisée en ce que** la partie silicone est composée de motifs T^{Ph} et Q.

3. Composition de silicone-polyester selon la revendication 1, **caractérisée en ce que** la partie silicone contient en outre des motifs T^{Me}.

4. Composition de silicone-polyester selon la revendication 3, **caractérisée en ce que** la partie silicone est composée de motifs T^{Ph}, T^{Me} et de motifs Q.

5. Composition de silicone-polyester selon l'une quelconque des revendications précédentes, **caractérisée en ce que les motifs** T^{Ph}, T^{Me} et les motifs Q sont présents dans des rapports molaires de 10 à 80 %, 0 à 70 % et 1 à 60 % respectivement, de préférence 30 à 50 %, 30 à 50 %, 10 à 30 %, calculés sur la somme molaire des motifs T^{Ph}, T^{Me} et Q.

6. Composition de silicone-polyester selon l'une quelconque des revendications précédentes, **caractérisée en ce que,** la fonction alcoxy restante représente de 40 à 200 % molaires (calcul basé sur Si en tant que 100 %).

7. Composition de silicone-polyester selon l'une quelconque des revendications précédentes, **caractérisée en ce que** le polyester et la silicone sont présents dans un rapport de 90 %:10 % à 10 %:90 %, de préférence 75 %:25 % à 40 %:60 % en poids.

8. Composition de silicone-polyester selon l'une quelconque des revendications précédentes, **caractérisée en ce que** la composition a une dureté à chaud d'au moins 2H à 220 °C, telle que mesurée par le procédé de test de dureté à chaud conformément à ASTM D3363.

9. Procédé de formation d'une composition de silicone-polyester, **caractérisé en ce qu**'une résine de polyester ou un précurseur de polyester et une résine de silicone ou un précurseur de silicone sont mélangés et mis en réaction ensemble de façon à former une composition de silicone-polyester, dans lequel la partie silicone contient des motifs T^{Ph} et Q et facultativement des motifs T^{Me} et est exempte de motifs D.

10. Procédé selon la revendication 9, **caractérisé en ce que** le précurseur de polyester est formé d'acide isophtalique, de néopentylglycol et de triméthylolpropane.

11. Procédé selon la revendication 9 ou 10, **caractérisé en ce que** le précurseur de silicone est formé d'un mélange de phényltriméthoxysilane ou phényltriéthoxysilane, de tétraéthylorthosilicate et facultativement de méthyltriméthoxysilane ou de méthyltriéthoxysilane.

12. Procédé selon l'une quelconque des revendications 9 à 11, dans lequel le précurseur de silicone et le précurseur de polyester sont d'abord mis en réaction séparément pour former une résine de silicone et une résine de polyester qui sont mises en réaction ensemble.

13. Revêtement sur un substrat, **caractérisé en ce que** le revêtement comprend une composition de silicone-polyester selon l'une quelconque des revendications 1 à 8.

14. Substrat portant un revêtement, **caractérisé en ce que** le revêtement comprend une composition de silicone-polyester selon l'une quelconque des revendications 1 à 8.

15. Substrat selon la revendication 14, **caractérisé en ce que** le substrat est constitué d'aluminium, d'acier inoxydable, de fer, de matières plastiques ou de verre.

16. Utilisation d'une composition de silicone-polyester selon l'une quelconque des revendications 1 à 8 pour former un revêtement sur un substrat.
